(19) Europäisches Patentamt
European Patent Office
Office européen des brevets

(11) Publication number: 0 094 219
A1

# (12) EUROPEAN PATENT APPLICATION

(21) Application number: 83302566.1

(22) Date of filing: 06.05.83

(51) Int. Cl.³: A 01 N 59/12

(30) Priority: 07.05.82 GB 8213309

(43) Date of publication of application: 16.11.83
Bulletin 83/46

(84) Designated Contracting States: BE CH DE FR GB IT LI LU NL SE

(71) Applicant: The Diversey Corporation, 201 City Centre Drive, Mississauga Ontario L5B 2Z9 (CA)

(72) Inventor: Monk, Derek Frederick, 60 Vernon Crescent Ravenshead, Nottingham NG15 9BQ (GB)

(74) Representative: Holmes, Michael John et al, Frank B. Dehn & Co. European Patent Attorneys Imperial House 15-19 Kingsway, London, WC2B 6UZ, (GB)

## (54) Germicidal iodine compositions.

(57) A germicidal composition which comprises a germicidally effective amount of iodine, one or more organic adjuvants, iodide ions and bromate or chlorate ions, the pH of the composition being below about 5.5. The compositions may be formulated to have a low iodine level and exhibit particularly favorable shelf-lives while being at a relatively low pH.

EP 0 094 219 A1

# Germicidal Iodine Compositions

This invention relates to improvements in or relating to germicidal iodine-containing compositions.

Germicidal iodine-containing compositions have been known for many years for use in veterinary and human medicine. These compositions are generally applied topically as disinfectants or for the prophylaxis and/or treatment of microbial infections which may be associated with lesions of the skin or mucous membranes. Iodine-containing compositions are sometimes referred to as "iodophors", particularly where the iodine is reversibly complexed with an organic substrate.

Iodine-containing compositions which have hitherto been available suffer from an inherent fall in titratable iodine with time, caused by reaction with organic adjuvants present in the compositions, or other side-reactions. For compositions containing from 0.5 to 20% available iodine, the fractional loss of iodine during the shelf-life of the product and under normal conditions is acceptable. However, for products containing less than 0.1% available iodine, the loss of iodine may be an appreciable fraction of the initial level, the iodine content possibly dropping to substantially zero within a few weeks. Consequently, most commercially available compositions contain between 0.5 and 20% iodine, but the majority of these products require dilution before use and the resulting solution is usually discarded after use.

U.S. Patent Specification No. 4 271 149 describes the formulation of an iodine-containing germicidal composition in which the iodine level is maintained over extended periods in the presence of organic adjuvants, by adding iodate and iodide ions to the composition.

The slow loss of iodine by reaction with the organic adjuvants is thus counterbalanced by the production of iodine according to the reaction

$$IO_3^{\theta} + 5I^{\theta} + 6H^{\theta} \longrightarrow 3I_2 + 3H_2O$$

If the pH is less than 5, the rate of production of iodine is too rapid and the iodate is converted to iodine over a relatively short period. However, low available iodine levels, e.g. in the range of from 0.01 to 1%, may be maintained in the compositions if the pH is kept within the range 5-7. On the other hand, the germicidal effectiveness of iodine is known to be greatest at pH's less than 5 and, in addition, the rate of reaction of iodine with organic materials is higher at above pH5 than at lower pH's, so that there are disadvantages in using iodate as an oxidant for iodide in such iodophor compositions.

U.S. Patent Specification No. 4 113 857 describes the preparation of an organic iodophor germicidal composition which is substantially free from iodide ions by reacting an organic iodophor-forming compound with an iodine adding agent selected from elemental iodine, metallic iodide salts or hydriodic acid in the presence of an oxidising stabiliser selected from iodate ions, bromate ions, chlorite ions, chromate ions, hypochlorite ions, nitrate ions, permanganate ions, persulphate ions and hydrogen peroxide, whereby iodine adds to the organic iodophor-forming compound to form the corresponding organic iodophor which is free of iodide ions. Any iodide initially present is rapidly converted to iodine and an excess of oxidant ensures that any iodide formed subsequently is also rapidly oxidised. This is achieved by using iodate as the oxidant at a relatively low pH which would be unsuitable for the slow release of iodine mentioned above. There are no examples of the use of the other oxidants mentioned.

We have now found that it is possible to prepare a germicidal iodine-containing composition containing one or more organic adjuvants and having a low available iodine level but which exhibits an extended shelf-life and has a low pH.

Thus, in one aspect, the invention provides a germicidal composition which comprises 1) a germicidally effective amount of iodine, 2) one or more organic adjuvants, 3) iodide ions and 4) bromate or chlorate ions, the pH of said composition being below about 5.5.

The invention allows the preparation of compositions containing organic adjuvants which have a low but effective iodine level, e.g. up to about 1%, more preferably in the range 0.01 to 0.25%.

Unless otherwise stated, all percentages referred to herein are by weight.

The pH of the compositions of the invention is generally below about 5.5. When the compositions contain bromate ions, it is preferred that the pH is in the range 3.5 to 5.5, more preferably 4 to 5, and when they contain chlorate ions the preferred pH range is 2 to 4. We have found that if the pH is greater than about 5.5, the rate of production of iodine by reaction of the chlorate or bromate ions with iodide ions is too low to balance any losses of iodine by reaction with the organic adjuvants. On the other hand, we have found that it is generally desired that the pH of the compositions is not too low as otherwise there is a danger that the rate of oxidation of the iodide ions is too fast with the result that elemental iodine may be precipitated. In addition, the compositions are intended to be acceptable for topical administration to the skin or mucous membranes and thus too low a pH is undesired. However, at the pH ranges mentioned above we have found that the rate of loss of iodine by reaction with any organic adjuvant is low so that a relatively low concentration

of iodine and bromate or chlorate ions is required. Furthermore, the germicidal effectiveness of the iodine is enhanced at these pH's.

The desired pH of the compositions may be conveniently achieved by incorporating buffering agents therein. Examples of buffering agents which may be used include citric acid/sodium citrate, lactic acid/sodium lactate, acetic acid/sodium acetate and phosphoric acid/sodium phosphate. If desired the sodium salts of these buffering agents may be replaced by salts of other metals or the ammonium radical. The buffering agent may conveniently be present in an amount of 0.01 to 1 M, e.g. about 0.05M.

The concentration of bromate or chlorate ions in the compositions is generally not critical. However, we have found it convenient to incorporate at least 0.005% bromate or chlorate ions and preferably 0.015 to 0.1%. The bromate or chlorate ions may be provided by addition of any convenient bromate or chlorate salt compatible with the compositions e.g. a water-soluble salt such as an alkali metal salt, for example sodium or potassium bromate or chlorate.

The amount of iodide present in the compositions should be sufficient to react with all the bromate or chlorate ions. For example, we have found it convenient to incorporate from 0.01 to 0.25% of iodide ions, although higher levels of iodide e.g. up to 1.0%, may be used to provide a larger "reservoir" of iodine or to aid the solubilisation of the iodine. The iodide ions may be provided by incorporating hydriodic acid or any convenient iodide salt compatible with the compositions e.g. a water-soluble salt such as an alkali metal iodide for example sodium or potassium iodide.

The compositions according to the invention are generally intended for topical administration to animals or humans and are generally provided in a form suitable therefor. Convenient forms of administration include solutions, emulsions, suspensions, creams, ointments and gels. For example, the compositions may be in the form of solutions suitable for use as teat dips in the treatment or prophylaxis of mastitis in cattle, udder or hand creams or disinfectant soaps for washing the skin. The compositions will preferably not require dilution before application to the skin or mucous membranes.

The compositions according to the invention will, as indicated above, include one or more organic adjuvants. Such organic adjuvants may be provided as substrates to which the iodine is complexed (e.g. polysaccharides), emulsifiers, surfactants, thickening agents, moisturisers (e.g. lanolin, glycerol and sorbitol) or solvents (e.g. propan-2-ol, 1,2-propanediol, and poly(1,2-ethanediol).

The compositions according to the invention exhibit particularly favourable shelf-lives while maintaining a desirably low level of available iodine at a relatively low pH. The low free iodine level avoids the dark brown colour associated with products having higher levels and, in the case of teat dips, reduces the possibility of iodine contaminating the milk due to skin absorption or improper teat washing before milking.

The invention is illustrated by the following non-limiting examples.

Example 1

Teat Dip Solution

| | % by weight |
|---|---|
| 1,2,3-Propanetriol | 5.0 |
| 1,2-Propanediol | 5.0 |
| Iodine | 0.1 |
| Sodium iodide | 0.1 |
| Sodium bromate | 0.02 |
| Citrate buffer (pH4) | to 100 |

The iodine, 1,2,3-propanetriol and 1,2-propanediol were mixed together with gentle warming until the iodine was completely dissolved. The sodium iodide, citrate buffer and finally the sodium bromate were then blended in to form a solution suitable for use as a teat dip e.g. for application to a cow's teats after milking in order to prevent mastitis.

Example 2

Teat Dip Solution

| | % by weight |
|---|---|
| 1,2,3-Propanetriol | 5.0 |
| 1,2-Propanediol | 5.0 |
| Iodine | 0.1 |
| Sodium iodide | 0.1 |
| Sodium chlorate | 0.05 |
| Citrate buffer (pH 2) | to 100 |

The above components were mixed together as in Example 1 to form a solution suitable for use as a teat dip.

The samples from Examples 1 and 2 were stored at room temperature and at 37°C to simulate extended storage at room temperature and the iodine levels measured by titration after suitable time intervals. The results are given in Table 1.

TABLE 1

| | Example 1 | Example 2 |
|---|---|---|
| Initial iodine content | 0.09% | 0.09% |
| Iodine content oven storage 37°C for 3 weeks | 0.08% | 0.09% |
| Iodine content room temperature storage for 3 weeks | 0.09% | 0.09% |

Example 3

Disinfectant Udder Cream

| | % by weight |
|---|---|
| Polyethylene glycol 1000 monocetyl ether | 2.4 |
| Cetostearyl alcohol | 9.6 |
| Liquid paraffin | 3.3 |
| Lanolin | 1.3 |
| Iodine | 0.05 |
| Sodium iodide | 0.1 |
| Sodium bromate | 0.05 |
| Citrate buffer (pH 4) | to 100 |

The iodine, liquid paraffin and lanolin were mixed together with gentle warming until the iodine was completely dissolved. The polyethylene glycol 1000 monocetyl ether, cetostearyl alcohol, sodium iodide, citrate buffer and finally sodium bromate were added, the mixture warmed to 70°C and mixed thoroughly

to form an emulsion suitable for use as a disinfectant udder cream.

Example 4

Disinfectant Hand Soap

| | % by weight |
|---|---|
| Sodium lauryl sulphate (28% soln) | 16.7 |
| Coconut diethanolamide (85% active) | 2.4 |
| Iodine | 0.05 |
| Potassium iodide | 1.0 |
| Sodium bromate | 0.05 |
| Citrate buffer (pH 4) | to 100 |

The iodine was dissolved in the coconut diethanolamide with gentle warming. The sodium lauryl sulphate, potassium iodide, citrate buffer and finally sodium bromate were added and mixed in to form a liquid germicidal hand soap.

The samples from Examples 3 and 4 were stored at room temperature and at 37°C to simulate extended storage at room temperature and the iodine levels monitored by titration against 0.01 N sodium thiosulphate solution. The hand soap may be titrated directly but the udder cream, being an emulsion, requires a modified method. To a 10.0 g sample of the udder cream, 30 $cm^3$ of propan-2-ol and 30 $cm^3$ of saturated sodium chloride are added and the mixture shaken; 20 $cm^3$ of trichloromethane are then added, the mixture shaken and the iodine in the trichloromethane layer titrated against 0.1 N sodium thiosulphate solution until colourless. The results are given in Table II.

TABLE II

| | Example 3 | Example 4 |
| --- | --- | --- |
| Initial iodine content | 0.017 | 0.047 |
| Iodine content after room temperature storage for: 1 week | 0.018 | 0.038 |
| 1 year | 0.030 | 0.060 |
| Iodine content after oven storage at 37°C for: 1 week | 0.014 | 0.018 |
| 1 year | 0.011 | 0.014 |

CLAIMS:

1. A germicidal composition which comprises a germicidally effective amount of iodine, one or more organic adjuvants, iodide ions and bromate or chlorate ions, the pH of said composition being below about 5.5.

2. A composition according to claim 1 which has an iodine level of up to about 1% by weight.

3. A composition according to claim 2 wherein the iodine level is in the range 0.01 to 0.25% by weight.

4. A composition according to any one of the preceding claims which contains at least 0.005% by weight of bromate or chlorate ions.

5. A composition according to any one of the preceding claims which contains bromate ions and the pH of said composition is in the range 3.5 to 5.5.

6. A composition according to claim 5 wherein the pH of said composition is in the range 4 to 5.

7. A composition according to any one of claims 1 to 4 which contains chlorate ions and the pH of said composition is in the range 2 to 4.

8. A composition according to any one of the preceding claims which contains from 0.01 to 1.0% by weight of iodide ions.

9. A composition according to any one of the preceding claims in a form suitable for topical administsration to animals or humans.

European Patent Office

# EUROPEAN SEARCH REPORT

0094219

Application number

EP 83 30 2566

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | US-A-4 113 857 (B.V. SHETTY) * Column 6, line 43 - column 7, line 14; claims * --- | 1,4,9 | A 01 N 59/12 |
| A | GB-A-2 060 385 (WEST AGRO-CHEMICAL) * Claims * ----- | 1-3,9 | |
| | | | TECHNICAL FIELDS SEARCHED (Int. Cl. 3) |
| | | | A 01 N |

The present search report has been drawn up for all claims

| Place of search | Date of completion of the search | Examiner |
|---|---|---|
| THE HAGUE | 02-08-1983 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document